# EUROPÄISCHE PATENTSCHRIFT

(11) **EP 3 268 624 B1**
(45) Veröffentlichungstag und Bekanntmachung des Hinweises auf die Patenterteilung: **11.08.2021**
(21) Anmeldenummer: 15709478.0
(22) Anmeldetag: 11.03.2015
(51) Int. Cl.: F16C 3/20

(54) **KURBELWELLE FÜR EINE REIHENZYLINDER-BRENNKRAFTMASCHINE SOWIE EINE REIHENZYLINDER-BRENNKRAFTMASCHINE**
CRANKSCHAFT FOR AN IN-LINE COMBUSTION ENGINE AND IN-LINE COMBUSTION ENGINE
VILEBREQUIN POUR MOTEUR À COMBUSTION EN LIGNE ET MOTEUR À COMBUSTION EN LIGNE

(43) Veröffentlichungstag der Anmeldung: 17.01.2018
(73) Patentinhaber: Promescon GmbH, 72622 Nürtingen (DE)
(72) Erfinder: TRZMIEL, Alfred, 72622 Nürtingen (DE)
(74) Vertreter: terpatent Patentanwälte ter Smitten Eberlein-Van Hoof Rütten Daubert
(86) Internationale Anmeldenummer: PCT/EP2015/055081
(87) Internationale Veröffentlichungsnummer: WO 2016/141986

(56) Entgegenhaltungen:
- CH-A- 297 119
- DE-A1- 2 333 998
- DE-A1- 3 151 091
- JP-A- S59 113 313
- None

## Beschreibung

Die Erfindung betrifft eine Kurbelwelle für eine Reihenzylinder-Brennkraftmaschine mit mindestens zwei Lagerstellen und einer Anzahl Kurbelkröpfungen, wobei die Kurbelkröpfungen derart um einen Winkel zueinander versetzt angeordnet sind, dass zwei Kurbelkröpfungen in winkelmäßiger Übereinstimmung zueinander vorgesehen sind und wobei den Kurbelkröpfungen Gegengewichtselemente zum Massenausgleich zugeordnet sind, wobei in Axialrichtung der Kurbelwelle gesehen die erste und die letzte Kurbelkröpfung in winkelmäßiger Übereinstimmung zueinander vorgesehen sind, wobei die Gegengewichtselemente der ersten und der letzten Kurbelkröpfung Zusatzgewichte aufweisen. Des Weiteren betrifft die Erfindung ein Reihenzylinder-Brennkraftmaschinen mit einem Kurbelgehäuse und einer darin aufgenommenen Kurbelwelle mit einer Anzahl von Kurbelkröpfungen sowie einem Zylindergehäuse mit einer entsprechenden Anzahl von Zylindern, wobei das Zylindergehäuse mit einem Zylinderkopf verbunden ist, in dem Einlass- und Auslassventile sowie mindestens eine Nockenwelle für die Einlassventile und mindestens eine Nockenwelle für die Auslassventile vorgesehen sind.

Eine derartige Kurbelwelle beziehungsweise eine derartige Reihenzylinder-Brennkraftmaschine ist aus der DE 10 2011 054 881 bekannt. Hiermit ist es grundsätzlich möglich, eine Vierzylinder-Brennkraftmaschine mit einer Dreizylinder Zündfolge zu betreiben, wobei der zweite und dritte Zylinder parallel laufen und gegebenenfalls einer der beiden Zylinder abgeschaltet werden kann, um Kraftstoff einzusparen und Emissionen zu verringern. Darüber hinaus können insbesondere im unteren Drehzahlbereich beide Zylinder gleichzeitig betrieben werden, wodurch der Abgasmassenstrom von zwei Zylindern zum Abgasturbolader geführt wird und damit die Turbine auch bei niedrigen Motordrehzahlen auf sehr hohe Turbinendrehzahlen beschleunigt werden kann, was ein hohes Drehmoment zur Folge hat.

Aus der gattungsgemäßen JP S59 113313 A ist es darüber hinaus bekannt, in Axialrichtung der Kurbelwelle gesehen die erste und die letzte Kurbelkröpfung In winkelmäßiger Übereinstimmung zueinander verlaufen zu lassen, wobei die Gegengewichtselemente der ersten und letzten Kurbelkröpfung in Axialrichtung gesehen jedoch übereinstimmend angeordnet sind.

Außerdem ist es auch aus den Druckschriften CH 297 119 A, DE 31 51 091 A1 und DE 23 33 998 A1 bekannt, in Axialrichtung der Kurbelwelle gesehen die erste und die letzte Kurbelkröpfung in winkelmäßiger Übereinstimmung zueinander verlaufen zu lassen.

Derartig betriebene Reihenmotoren weisen jedoch den Nachteil auf, dass freie Massenmomente entstehen, die ein negatives Schwingungsverhalten verursachen und damit auch zu einer erhöhten dynamischen Belastung des Motorblocks sowie zu einem negativen Akustikverhalten im Fahrzeuginneren führen.

Der Erfindung liegt damit die Aufgabe zugrunde, eine Kurbelwelle für eine Vierzylinder-Brennkraftmaschine bzw. eine Reihenzylinder-Brennkraftmaschine bereitzustellen, die die oben genannten Nachteile auf einfache und kostengünstige Weise vermeidet.

Diese Aufgabe wird durch eine Kurbelwelle gelöst, bei der die Zusatzgewichte in Axialrichtung der Kurbelwelle gesehen spiegelbildlich zueinander angeordnet sind. Hierdurch werden schon durch die parallele Anordnung der ersten und letzten Kurbelkröpfungen die freien Massenmomente der 1. Ordnung weitgehend reduziert. Durch das Anbringen von weiteren Zusatzgewichten an der ersten und der letzten Kurbelkröpfung kann die Schwingungsneigung noch weiter verbessert werden. Ein negatives Akustikverhalten kann somit ausgeschlossen werden. Auch müssen die Zylinderkopfschrauben nicht anders gestaltet werden, um einer erhöhten Zünddruckbelastung Rechnung zu tragen.

In einer für eine Vierzylinder-Brennkraftmaschine vorteilhaften Ausführungsform einer erfindungsgemäßen Kurbelwelle sind eine erste und eine zweite Kurbelkröpfung um einen Winkel von α = ca. 120° zueinander versetzt und die zweite und eine dritte Kurbelkröpfung um einen Winkel von β = ca. 120° zueinander versetzt und die dritte und eine vierte Kurbelkröpfung um einen Winkel von γ = ca. 120° zueinander versetzt.

In einer ersten für eine Sechszylinder-Brennkraftmaschine vorteilhaften Ausführungsform einer erfindungsgemäßen Kurbelwelle sind eine erste und eine zweite Kurbelkröpfung um einen Winkel von α' = ca. 240° zueinander versetzt und die zweite und eine dritte Kurbelkröpfung um einen Winkel von β' = ca. 240° zueinander versetzt und die dritte und eine vierte Kurbelkröpfung um einen Winkel von γ' = ca. 360° zueinander versetzt und die vierte und eine fünfte Kurbelkröpfung um einen Winkel von δ' = ca. 120° zueinander versetzt und die fünfte und eine sechste Kurbelkröpfung um einen Winkel von ε' = ca. 120° zueinander versetzt.

In einer zweiten für eine Sechszylinder-Brennkraftmaschine vorteilhaften Ausführungsform einer erfindungsgemäßen Kurbelwelle sind eine erste und eine zweite Kurbelkröpfung um einen Winkel von α" = ca. 60° zueinander versetzt und die zweite und eine dritte Kurbelkröpfung um einen Winkel von β' = ca. 240° zueinander versetzt und die dritte und eine vierte Kurbelkröpfung um einen Winkel von γ" = ca. 180° zueinander versetzt und die vierte und eine fünfte Kurbelkröpfung um einen Winkel von δ" = ca. 120° zueinander versetzt und die fünfte und eine sechste Kurbelkröpfung um einen Winkel von ε" = ca. 120° zueinander versetzt.

Des Weiteren wird die Aufgabe durch eine als Vierzylinder ausgeführte Reihenzylinder-Brennkraftmaschine gelöst, bei der eine Zündfolge in den Zylindern in der Reihenfolge der Zylinder: erster Zylinder, zweiter Zylinder, dritter Zylinder, vierter Zylinder vorgesehen ist.

Sowohl durch die Kurbelwelle als auch durch eine Reihenzylinder-Brennkraftmaschine, die eine derartige Kurbelwelle beinhaltet, ist es nun möglich, eine als Vierzylinder ausgeführte Reihenzylinder-Brennkraftmaschine derart zu betreiben, dass eine ausreichend lange Auslassventilsteuerzeit für jeden einzelnen Zylinder bereitgestellt werden kann, ohne dass ein negatives Schwingungsverhalten sowohl in dynamischer als auch in akustischer Hinsicht auftritt. Hierdurch lässt sich die interne Abgasrückführung, die Ladungswechselverluste sowie der Kraftstoffverbrauch deutlich optimieren. Insbesondere bei einem Lastanstieg ist eine Absenkung der Ausschlebeverluste und der intern rückgeführten Restgasmenge wichtig, um den Verbrennungsprozess zu optimieren. Durch den erhöhten Massenstromausstoß von Abgas beim Abgasauslasstakt der Zylinder, die der ersten und vierten Kurbelkröpfung der Kurbelwelle zugeordnet sind, erhält der Turbolader einen Drehmomentstoß, der zu einer weiteren Verbesserung des Wirkungsgrades der Brennkraftmaschine führt.

In vorteilhafter Weise ist es auch möglich, mit einer erfindungsgemäßen Kurbelwelle eine als Sechszylinder ausgeführte Reihenzylinder-Brennkraftmaschine mit den Winkelabständen α', β', γ', δ', ε' oder α", β", γ", δ", ε" der Kurbelkröpfungen zu betreiben, wobei eine Zündfolge in den Zylindern in der Reihenfolge der Zylinder: erster Zylinder (20), zweiter Zylinder, vierter Zylinder, sechster Zylinder, fünfter Zylinder, dritter Zylinder vorgesehen ist. Hierdurch kann die Brennkraftmaschine je nach Anordnung mit einer unregelmäßigen oder regelmäßigen Zündfolge betrieben werden.

Des Weiteren kann in vorteilhafter Weise im zylinderkopf eine variable Ventiltriebsvorrichtung vorgesehen sein. Auch ist es vorteilhaft, wenn im unteren Lastbereich eine Zylinderabschaltung des Zylinders, der mit der ersten oder letzten Kurbelkröpfung in Wirkverbindung steht, vorgesehen ist. Hierdurch ist es möglich, die Reihenzylinder-Brennkraftmaschine im unteren Lastbereich auf einfachste Weise als reine Drei- bzw. Fünfzylinder-Brennkraftmaschine mit drei oder fünf gleich großen Hubräumen zu betreiben.

In diesem Zusammenhang kann es auch besonders vorteilhaft sein, wenn die variable Ventilvorrichtung ein Exzenterorgan aufweist, das zumindest in einer Stellung einen Nullhub zumindest der Einlassventile des abzuschaltenden Zylinders bewirkt. Es bleibt anzumerken, dass natürlich auch ein Exzenterorgan vorgesehen werden kann, das einen Nullhub der Auslassventile bewirkt.

Die Erfindung wird näher anhand der nachfolgenden Zeichnung erläutert. Hierbei zeigt:
Figur 1 eine schematische perspektivische Ansicht einer als Vierzylinder ausgeführten Reihenzylinder-Brennkraftmaschine mit einer erfindungsgemäßen Kurbelwelle,
Figur 2 eine perspektivische Ansicht einer Ausführungsform der erfindungsgemäßen Kurbelwelle aus Figur 1,
Figur 3 eine schematische Kurbelstern-Ansicht der erfindungsgemäßen Kurbelwelle aus Figur 1,
Figur 4 eine schematische Kurbelstern-Ansicht einer ersten erfindungsgemäßen Ausführung einer Kurbelwelle in Sechszylinder-Ausführung mit schematischer Darstellung einer Zylinderanordnung, und
Figur 5 eine schematische Kurbelstern-Ansicht einer zweiten erfindungsgemäßen Ausführung einer Kurbelwelle in Sechszylinder-Ausführung mit schematischer Darstellung einer Zylinderanordnung.

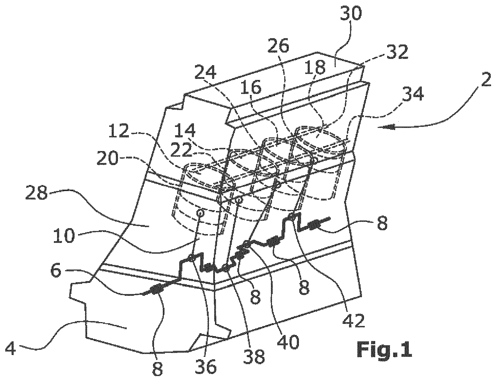

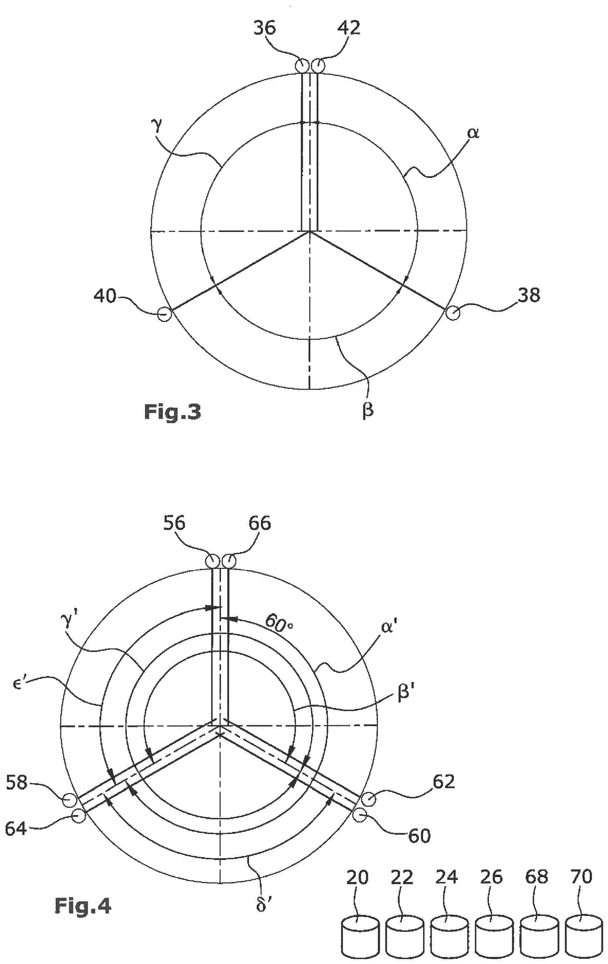

Figur 1 zeigt in schematischer Form eine perspektivische Ansicht einer Reihenzylinder-Brennkraftmaschine 2, die als Vierzylinder-Reihenmotor mit Viertakt-Verfahren betrieben wird. Hierbei sei angemerkt, dass bei der Beschreibung der winkelmäßigen Ausrichtung von Kurbelkröpfungen zueinander von einer Projektion (siehe Figuren 3 bis 5) in eine Ebene ausgegangen wird. Die Vierzylinder-Brennkraftmaschine 2 weist im Wesentlichen ein Kurbelgehäuse 4 auf, in dem eine Kurbelwelle 6 an fünf Lagerstellen 8 drehbar gelagert ist. Die Kurbelwelle 6 ist über Pleuelstangen 10 mit Kolben 12, 14, 16, 18 verbunden, die in jeweiligen Zylindern 20, 22, 24, 26 auf bekannte Weise auf- und ab bewegbar sind. Die vier Zylinder 20, 22, 24, 26 sind in einem Zylindergehäuse 28 angeordnet. Das Zylindergehäuse 28 wird durch einen Zylinderkopf 30 abgeschlossen, in dem nicht weiter dargestellte Einlass- und Auslassventile für die vier Zylinder 20, 22, 24, 26 auf bekannte Weise angeordnet sind. Schematisch sind noch zwei Nockenwellen 32, 34 dargestellt, die auf die Einlass- und Auslassventile einwirken.

Die Kurbelwelle 6 weist Kurbelkröpfungen 36, 38, 40, 42 auf, die auf bekannte Weise mit den Pleuelstangen 10 verbunden sind.

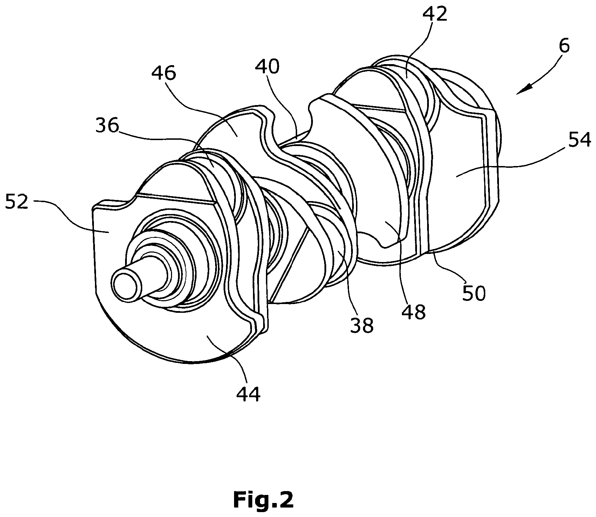

Erfindungsgemäß ist nun vorgesehen, dass ein unsymmetrischer Abstand der Kurbelkröpfungen zueinander besteht. Dies wird besonders deutlich aus der perspektivischen Ansicht in Figur 2 und der schematischen Kurbelstern-Ansicht gemäß Figur 3. Im vorliegenden Ausführungsbeispiel sind die Kurbelkröpfungen so angeordnet, dass die Kurbelkröpfung 36 mit der Kurbelkröpfung 38 um einen Winkel von α = 120° versetzt ist. Die Kurbelkröpfung 38 ist in Bezug auf die Kurbelkröpfung 40 ebenfalls um einen Winkel von β = 120° versetzt. Auch die Kurbelkröpfung 40 schließt mit der Kurbelkröpfung 42 einen Winkel von γ = 120° ein, so dass die Kurbelkröpfungen 36 und 42 in winkelmäßiger Übereinstimmung zueinander vorgesehen sind. Die Zündfolge in den Zylindern 20, 22, 24, 26, sei es durch Selbstzündung beim Dieselmotor oder durch Zündfunke beim Ottomotor, erfolgt entsprechend den Winkelabständen der Kurbelkröpfungen 36, 38, 40, 42. Durch diese Vorgehensweise ist es möglich, einen klassischen Vierzylinder-Motor hinsichtlich der Zündfolge und der damit verbundenen Auslassventilsteuerzeiten als Dreizylinder-Motor zu bertreiben. Dies bietet, wie eingangs dargestellt, große Vorteile hinsichtlich der Emissions- und Verbrauchsbegrenzung eines derartigen Motors.

Figur 2 zeigt zudem deutlich Gegengewichtselemente 44, 46, 48, 50, die den Kurbelkröpfungen 36, 38, 40, 42 auf bekannte Weise zugeordnet sind. Um nun bei einer erfindungsgemäßen Ausgestaltung der Kurbelwelle 6 ein optimales Schwingungsverhalten zu gewährleisten, sind an der ersten Kurbelkröpfung 36 und an der vierten Kurbelkröpfung 42 Zusatzgewichte 52, 54 vorgesehen, um insbesondere die freien Massenmomente der 1. Ordnung zu reduzieren. Hierdurch ist es möglich, die erfindungsgemäße Kurbelwelle 6 in einer herkömmlichen Brennkraftmaschine einzusetzen, ohne Verstärkungen oder besondere Befestigungsmaßnahmen hinsichtlich des Zylindergehäuses 28 vornehmen zu müssen.

Figur 4 zeigt eine schematische Kurbelstern-Ansicht einer ersten Ausführungsform einer erfindungsgemäßen Kurbelwelle 6 in Sechszylinder-Ausführung. Hierbei sind sechs Kurbelkröpfungen 56, 58, 60, 62, 64 und 66 vorgesehen, die entsprechenden Zylindern 20, 22, 24, 26, 68, 70 zugeordnet sind. Die erste und zweite Kurbelkröpfung 56, 58 sind hierbei um einen Winkel von α' = ca. 240° zueinander versetzt. Die zweite und dritte Kurbelkröpfung 58, 60 sind um einen Winkel von β' = ca. 240° zueinander versetzt und die dritte und eine vierte Kurbelkröpfung 60, 62 um einen Winkel von γ' = ca. 360° zueinander versetzt sind und die vierte und eine fünfte Kurbelkröpfung 62, 64 um einen Winkel von δ' = ca. 120° zueinander versetzt sind und die fünfte und eine sechste Kurbelkröpfung 64, 66 um einen Winkel von ε' = ca. 120° zueinander versetzt sind. Eine derartige Brennkraftmaschine kann natürlich klassisch als Sechszylinder mit einer Zündfolge der Zylinder 20 - 22 - 26 - 70 - 68 - 24 betrieben werden. Er kann jedoch auch in einer Fünfzylinder Zündfolge je nach Lastzustand (20 und/oder 70) - 22 - 26 - 68 - 24. Es kann also die klassische Kurbelwelle 6 einer Sechszylinder-Brennkraftmaschine unverändert übernommen werden, wobei der Massenausgleich und die freien Massenmomente auch bei abgeschalteten Zylindern auf 0-Niveau bleiben. Durch eine gleichzeitige Zündung von Zylinder 20 und 70 werden auch beispielsweise Zylinderkopfschrauben eines Zylinderkopfes nicht höher belastet. Jedoch ist hier aufgrund des Wegfalls der Zündfolge im sechsten Zylinder in der klassischen Reihenfolge keine regelmäßige Zündfolge gewährleistet.

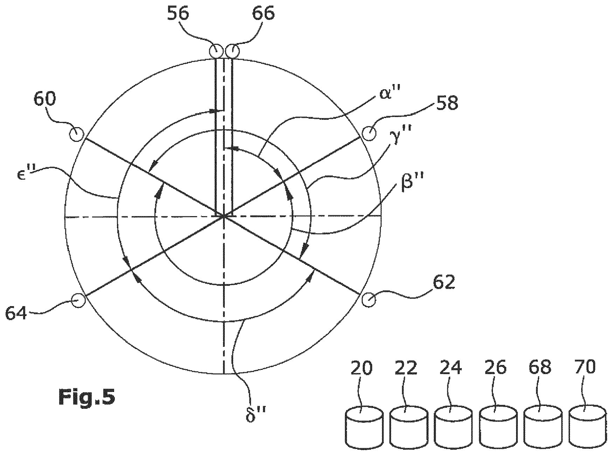

Eine derartige regelmäßige Zündfolge kann mit einer in Figur 5 als Kurbelstern-Ansicht gezeigten zweiten Ausführungsform einer erfindungsgemäßen Kurbelwelle 6 In Sechszylinder-Ausführung erreicht werden. Hierbei sind sechs Kurbelkröpfungen 56, 58, 60, 62, 64 und 66 vorgesehen, die entsprechenden Zylindern 20, 22, 24, 26, 68, 70 zugeordnet sind. Die erste und zweite Kurbelkröpfung 56, 58 sind hierbei um einen Winkel von α" = ca. 60° zueinander versetzt. Die zweite und dritte Kurbelkröpfung 58, 60 sind um einen Winkel von β" = ca. 240° zueinander versetzt und die dritte und eine vierte Kurbelkröpfung 60, 62 um einen Winkel von γ" = ca. 180° zueinander versetzt sind und die vierte und eine fünfte Kurbelkröpfung 62, 64 um einen Winkel von δ" = ca. 120° zueinander versetzt sind und die fünfte und eine sechste Kurbelkröpfung 64, 66 um einen Winkel von ε" = ca. 120° zueinander versetzt sind. Die Zündfolge lautet auch hier klassisch als Sechszylinder: 20 - 22 - 26 - 70 - 68 - 24 und als Fünfzylinder: (20 und/oder 70) - 22 - 26 - 68 - 24.

Über eine variable Ventilvorrichtung kann auf besonders einfache Weise eine Zylinderabschaltung realisiert werden. Um im unteren Lastbereich eine Zylinderabschaltung des Zylinders (20, 26; 20, 70), der mit der ersten oder letzten Kurbelkröpfung (36, 42; 56, 66) in Wirkverbindung steht, vor zu sehen, kann die variable Ventilvorrichtung ein Exzenterorgan ausweisen, das zumindest in einer Stellung einen Nullhub zumindest der Einlassventile des abzuschaltenden Zylinders 20, 26; 20, 70 bewirkt.

## Patentansprüche

1. Kurbelwelle für eine Reihenzylinder-Brennkraftmaschine (2) mit mindestens zwei Lagerstellen (8) und einer Anzahl Kurbelkröpfungen (36, 38, 40, 42; 56, 58, 60, 62, 64, 66), wobei die Kurbelkröpfungen (36, 38, 40, 42; 56, 58, 60, 62, 64, 66) derart um einen Winkel zueinander versetzt angeordnet sind, dass mindestens zwei Kurbelkröpfungen (36, 42; 56, 66) in winkelmäßiger Übereinstimmung zueinander vorgesehen sind und wobei den Kurbelkröpfungen (36, 38, 40, 42; 56, 58, 60, 62, 64, 66) Gegengewichtselemente zum Massenausgleich zugeordnet sind, wobei in Axialrichtung der Kurbelwelle (6) gesehen die erste und die letzte Kurbelkröpfung (36, 42; 56, 66) in winkelmäßiger Übereinstimmung zueinander vorgesehen sind, wobei die Gegengewichtselemente (44, 46, 48, 50) der ersten und der letzten Kurbelkröpfung Zusatzgewichte (52, 54) aufweisen, **dadurch gekennzeichnet, dass** die Zusatzgewichte (52, 54) in Axialrichtung der Kurbelwelle (6) gesehen spiegelbildlich zueinander angeordnet sind.

2. Kurbelwelle für eine Reihenzylinder-Brennkraftmaschine nach Anspruch 1, **dadurch gekennzeichnet, dass** eine erste und eine zweite Kurbelkröpfung (36, 38) um einen Winkel von α = ca. 120° zueinander versetzt sind und die zweite und eine dritte Kurbelkröpfung (38, 40) um einen Winkel von β = ca. 120° zueinander versetzt sind und die dritte und eine vierte Kurbelkröpfung (40, 42) um einen Winkel von γ = ca. 120° zueinander versetzt sind.

3. Kurbelwelle für eine Reihenzylinder-Brennkraftmaschine nach Anspruch 1, **dadurch gekennzeichnet, dass** eine erste und eine zweite Kurbelkröpfung (56, 58) um einen Winkel von α' = ca. 240° zueinander versetzt sind und die zweite und eine dritte Kurbelkröpfung (58, 60) um einen Winkel von β' = ca. 240° zueinander versetzt sind und die dritte und eine vierte Kurbelkröpfung (60, 62) um einen Winkel von γ' = ca. 360° zueinander versetzt sind und die vierte und eine fünfte Kurbelkröpfung (62, 64) um einen Winkel von δ' = ca. 120° zueinander versetzt sind und die fünfte und eine sechste Kurbelkröpfung (64, 66) um einen Winkel von ε' = ca. 120° zueinander versetzt sind.

4. Kurbelwelle für eine Reihenzylinder-Brennkraftmaschine nach Anspruch 1, **dadurch gekennzeichnet, dass** eine erste und eine zweite Kurbelkröpfung (56, 58) um einen Winkel von α" = ca. 60° zueinander versetzt sind und die zweite und eine dritte Kurbelkröpfung (58, 60) um einen Winkel von β" = ca. 240° zueinander versetzt sind und die dritte und eine vierte Kurbelkröpfung (60, 62) um einen Winkel von γ" = ca. 180° zueinander versetzt sind und die vierte und eine fünfte Kurbelkröpfung (62, 64) um einen Winkel von δ" = ca. 120° zueinander versetzt sind und die fünfte und eine sechste Kurbelkröpfung (64, 66) um einen Winkel von ε" = ca. 120° zueinander versetzt sind.

5. Reihenzylinder-Brennkraftmaschine als Vierzylinder ausgeführt, mit einem Kurbelgehäuse (4) und einer darin aufgenommenen Kurbelwelle (6) nach Anspruch 2 mit einer Anzahl von Kurbelkröpfungen (36, 38, 40, 42) sowie einem Zylindergehäuse (28) mit einer entsprechenden Anzahl von Zylindern (20, 22, 24, 26), wobei das Zylindergehäuse (28) mit einem Zylinderkopf (30) verbunden ist, in dem Einlass- und Auslassventile sowie mindestens eine Nockenwelle (32) für die Einlassventile und mindestens eine Nockenwelle (34) für die Auslassventile vorgesehen sind, **dadurch gekennzeichnet, dass** eine Zündfolge in den Zylindern (20, 22, 24, 26) in der Reihenfolge der Zylinder: erster Zylinder (20), zweiter Zylinder (22), dritter Zylinder (24), vierter Zylinder (26) vorgesehen ist.

6. Reihenzylinder-Brennkraftmaschine mit einem Kurbelgehäuse (4) und einer darin aufgenommenen Kurbelwelle (6) nach Anspruch 3 oder 4 mit einer Anzahl von Kurbelkröpfungen (56, 58, 60, 62, 64, 66) sowie einem Zylindergehäuse (28) mit einer entsprechenden Anzahl von Zylindern (20, 22, 24, 26, 68, 70), wobei das Zylindergehäuse (28) mit einem Zylinderkopf (30) verbunden ist, in dem Einlass- und Auslassventile sowie mindestens eine Nockenwelle (32) für die Einlassventile und mindestens eine Nockenwelle (34) für die Auslassventile vorgesehen sind, **dadurch gekennzeichnet, dass** eine Zündfolge in den Zylindern (20, 22, 24, 26, 68, 70) In der Reihenfolge der Zylinder: erster Zylinder (20), zweiter Zylinder (22), vierter Zylinder (26), sechster Zylinder (70), fünfter Zylinder (68), dritter Zylinder (24) vorgesehen ist.

7. Reihenzylinder-Brennkraftmaschine nach Anspruch 5 oder 6, **dadurch gekennzeichnet, dass** im Zylinderkopf (30) eine variable Ventittriebsvorrichtung vorgesehen ist.

8. Reihenzylinder-Brennkraftmaschine nach einem der Ansprüche 5 - 7, **dadurch gekennzeichnet, dass** im unteren Lastbereich eine Zylinderabschaltung des Zylinders (20, 26; 20, 70), der mit der ersten oder letzten Kurbelkröpfung (36, 42; 56, 66) in Wirkverbindung steht, vorgesehen ist.

9. Reihenzylinder-Brennkraftmaschine nach Anspruch 7 oder 8, **dadurch gekennzeichnet, dass** die variable Ventilvorrichtung ein Exzenterorgan ausweist, das zumindest in einer Stellung einen Nullhub zumindest der Einlassventile des abzuschaltenden Zylinders (20, 26; 20, 70) bewirkt.

## Claims

1. Crankshaft for an in-line internal combustion engine (2) with at least two bearing points (8) and a number of crank throws (36, 38, 40, 42; 56, 58, 60, 62 64, 66), wherein the crank throws (36, 38, 40, 42; 56, 58, 60, 62 64, 66) are arranged angularly offset with respect to each other such that at least two crank throws (36, 42; 56, 66) are provided in angular coincidence with each other, and wherein the crank throws (36, 38, 40, 42; 56, 58, 60, 62 64, 66) are associated with counter-weight elements for mass balance, the first and the last crank throw (36, 42; 56, 66), seen in the axial direction of the crankshaft (6), being provided in angular coincidence with each other, wherein the counter-weight elements (44, 46, 48, 50) of the first and the last crank throw have additional weights (52, 54), **characterized in that** the additional weights (52, 54) are arranged in a mirrored manner, seen in the axial direction.

2. Crankshaft for an in-line internal combustion engine of claim 1, **characterized in that** the first and second crank throws (36, 38) are offset with respect to each other by an angle α = ca. 120°, and the second and third crank throws (38, 40) are offset with respect to each other by an angle β = ca. 120°, and the third and fourth crank throws (40, 42) are offset with respect to each other by an angle of γ = ca. 120°.

3. Crankshaft for an in-line internal combustion engine of claim 1, **characterized in that** a first and a second crank throw (56, 58) are offset with respect to each other by an angle α' = ca. 240°, and the second and a third crank throw (58, 60) are offset with respect to each other by an angle β' = ca. 240°, and the third and a fourth crank throw (60, 62) are offset with respect to each other by an angle γ' = ca. 360°, and the fourth and a fifth crank throw (62, 64) are offset with respect to each other by an angle δ' = ca. 120°, and the fifth and a sixth crank throw (64, 66) are offset with respect to each other by an angle ε' = ca. 120°.

4. Crankshaft for an in-line internal combustion engine of claim 1, **characterized in that** a first and a second crank throw (56, 58) are offset with respect to each other by an angle α" = ca. 60°, and the second and a third crank throw (58, 60) are offset with respect to each other by an angle β" = ca. 240°, and the third and a fourth crank throw (60, 62) are offset with respect to each other by an angle γ" = ca. 180°, and the fourth and a fifth crank throw (62, 64) are offset with respect to each other by an angle δ" = ca. 120°, and the fifth and a sixth crank throw (64, 66) are offset with respect to each other by an angle ε" = ca. 120°.

5. In-line internal combustion engine in four-cylinder configuration with a crankcase (4) and a crankshaft (6) of claim 2 received therein and having a number of crank throws (36, 38, 40, 42), as well as with a cylinder housing (28) with a corresponding number of cylinders (20, 22, 24, 26), wherein the cylinder housing (28) is connected to a cylinder head (30) in which inlet and outlet valves are provided as well as at least one camshaft (32) for the inlet valves and at least one camshaft (34) for the outlet valves, **characterized in that** an ignition sequence in the cylinders (20, 22, 24, 26) is in the following order of the cylinders: first cylinder (20), second cylinder (22), third cylinder (24), fourth cylinder (26).

6. In-line internal combustion engine with a crankcase (4) and a crankshaft (6) of claim 3 or 4 received therein and having a number of crank throws (56, 58, 60, 62, 64, 66), as well as with a cylinder housing (28) with a corresponding number of cylinders (20, 22, 24, 26, 68, 70), wherein the cylinder housing (28) is connected to a cylinder head (30) in which inlet and outlet valves are provided as well as at least one camshaft (32) for the inlet valves and at least one camshaft (34) for the outlet valves, **characterized in that** an ignition sequence in the cylinders (20, 22, 24, 26, 68, 70) is in the following order of the cylinders: first cylinder (20), second cylinder (22), fourth cylinder (26), sixth cylinder (70), fifth cylinder (68), third cylinder (24).

7. In-line internal combustion engine of claim 5 or 6, **characterized in that** a variable valve driving device is arranged in the cylinder head (30).

8. In-line internal combustion engine of one of claims 5 to 7, **characterized in that,** in the lower load ranges, a cylinder deactivation of that cylinder (20, 26; 20, 70) is provided that is operatively connected with the first or the last crank throw (36, 42; 56, 66).

9. In-line internal combustion engine of claim 7 or 8, **characterized in that** the variable valve device has an eccentric member which in at least one position causes a zero stroke of at least the inlet valves of the cylinder (20, 26; 20, 70) to be deactivated.

## Revendications

1. Vilebrequin pour un moteur à combustion interne à cylindres en ligne (2) avec au moins deux logements (8) et un nombre de coudes de vilebrequin (36, 38, 40, 42; 56, 58, 60, 62, 64, 66), les coudes de vilebrequin (36, 38, 40, 42; 56, 58, 60, 62, 64, 66) étant disposés décalés d'un angle les uns aux autres de telle sorte qu'au moins deux coudes de vilebrequin (36, 42; 56, 66) sont prévus en correspondance angulaire entre eux et que des éléments de contrepoids sont associés aux coudes de vilebrequin (36, 38, 40, 42; 56, 58, 60, 62, 64, 66) pour l'équilibrage de masse, le premier et le dernier coude de vilebrequin (36, 42; 56, 66), vu dans la direction axiale du vilebrequin (6), étant prévus en correspondance angulaire entre eux, les éléments de contre-poids (44, 46, 48, 50) de la première et de la dernière coude de vilebrequin ayant des poids supplémentaires (52, 54), **caractérisé en ce que,** vu dans la direction axiale, les poids supplémentaires (52, 54) sont disposés en miroir l'un de l'autre.

2. Vilebrequin pour moteur à combustion interne à cylindres en ligne selon la revendication 1, **caractérisé en ce qu'un** premier et un deuxième coude de vilebrequin (36, 38) sont décalés l'un de l'autre d'un angle α = env. 120° et le deuxième et un troisième coude de vilebrequin (38, 40) sont décalées l'un de l'autre d'un angle de β = env. 120° et le troisième coude de vilebrequin et un quatrième coude de vilebrequin (40, 42) sont décalées l'un de l'autre d'un angle de γ = env. 120°.

3. Vilebrequin pour un moteur à combustion interne à cylindres en ligne selon la revendication 1, **caractérisé en ce qu'un** premier et un deuxième coude de vilebrequin (56, 58) sont décalés l'un de l'autre d'un angle α' = env. 240° et le deuxième et un troisième coude de vilebrequin (58, 60) sont décalés l'un de l'autre par un angle de β' = env. 240° et le troisième et un quatrième coude de vilebrequin (60, 62) sont décalées l'un de l'autre d'un angle γ' = env. 360° et le quatrième et un cinquième coude de vilebrequin (62, 64) sont décalés l'un de l'autre par un angle δ' = env. 120° et le cinquième et un sixième coude de vilebrequin (64, 66) sont décalés l'un de l'autre d'un angle ε' = env. 120°.

4. Vilebrequin pour un moteur à combustion interne à cylindres en ligne selon la revendication 1, **caractérisé en ce qu'un** premier et un deuxième coude de vilebrequin (56, 58) sont décalés l'un de l'autre d'un angle α" = env. 60° et le deuxième et un troisième coude de vilebrequin (58, 60) sont décalés l'un de l'autre d'un angle β" = env. 240° et le troisième et le quatrième coude de vilebrequin (60, 62) sont décalés l'un de l'autre d'un angle de γ" = env. 180° et le quatrième et un cinquième coude de vilebrequin (62, 64) sont décalés l'un de l'autre d'un angle δ" = env. 120° et le cinquième et un sixième coude de vilebrequin (64, 66) sont décalés l'un de l'autre d'un angle ε" = env. 120°.

5. Moteur à combustion interne à cylindres en ligne conçu comme un quatre cylindres, avec un carter de vilebrequin (4) et un vilebrequin (6) logé dans celui-ci selon la revendication 2, comportant un nombre de coudes de vilebrequin (36, 38, 40, 42) et un carter de cylindre (28) avec un nombre correspondant de cylindres (20, 22, 24, 26), le carter de cylindre (28) étant relié à une tête de cylindre (30) dans laquelle sont prévus des soupapes d'admission et des soupapes de sortie et au moins un arbre à cames (32) pour les soupapes d'admission et au moins un arbre à cames (34) pour les soupapes de sortie, **caractérisé en ce qu'**une séquence d'allumage dans les cylindres (20, 22, 24, 26) est prévue dans l'ordre des cylindres: le premier cylindre (20), le deuxième cylindre (22), le troisième cylindre (24), le quatrième cylindre (26).

6. Moteur à combustion interne à cylindres en ligne avec un carter (4) et un vilebrequin (6) logé dans celui-ci selon la revendication 3 ou 4, avec un nombre de coudes de vilebrequin (56, 58, 60, 62, 64, 66) et un carter de cylindre (28) avec un nombre correspondant de cylindres (20, 22, 24, 26, 68, 70), le carter de cylindre (28) étant relié à une tête de cylindre (30) dans laquelle sont prévus des soupapes d'admission et des soupapes de sortie et au moins un arbre à cames (32) pour les soupapes d'admission et au moins un arbre à cames (34) pour les soupapes de sortie, **caractérisé en ce qu'**une séquence d'allumage dans les cylindres (20, 22, 24, 26, 68, 70) est prévue dans l'ordre des cylindres: le premier cylindre (20), le deuxième cylindre (22), le quatrième cylindre (26), le sixième cylindre (70), cinquième cylindre (68), le troisième cylindre (24).

7. Moteur à combustion interne à cylindres en ligne selon la revendication 5 ou 6, **caractérisé en ce qu'un** dispositif d'entrainement variable des soupapes est prévu dans la tête de cylindre (30).

8. Moteur à combustion interne à cylindres en ligne selon l'une des revendications 5 à 7, **caractérisé en ce que** dans la plage de charge inférieure, une désactivation du cylindre (20, 26; 20, 70), qui est en liaison fonctionnelle avec le premier ou le dernier coude de vilebrequin (36, 42; 56, 66), est prévu.

9. Moteur à combustion interne à cylindres en ligne selon la revendication 7 ou 8, **caractérisé en ce que** le dispositif de soupape variable comprend un élément excentrique qui, au moins dans une position, provoque une levée nulle d'au moins les soupapes d'admission du cylindre (20, 26; 20, 70) à désactiver.
